# EUROPEAN PATENT SPECIFICATION

(11) **EP 4 218 363 B1**
(45) Date of publication and mention of the grant of the patent: **25.09.2024**
(21) Application number: 20765008.6
(22) Date of filing: 01.09.2020
(51) Int. Cl.: H05B 6/06

(54) **ZONE-FREE INDUCTION COOKER METHOD AND CONTROLLER**
ZONENFREIES INDUKTIONSKOCHVERFAHREN UND STEUERGERÄT
PROCÉDÉ DE DISPOSITIF DE CUISSON PAR INDUCTION SANS ZONE ET DISPOSITIF DE COMMANDE

(43) Date of publication of application: 02.08.2023
(73) Proprietor: Vestel Elektronik Sanayi ve Ticaret A.S., 45030 Manisa (TR)
(72) Inventor: KIZILARI, Hüseyin Cem, 45030 Manisa (TR); KÍRÍSKEN, Barbaros, 45030 Manisa (TR)
(74) Representative: Page White Farrer
(86) International application number: PCT/EP2020/074357
(87) International publication number: WO 2022/048732

(56) References cited:
- EP-A1- 2 779 787
- EP-A2- 2 506 672
- EP-B1- 2 779 787
- JP-A- 2018 101 471

## Description

### Technical Field

The present disclosure relates to a method of controlling a zone-free induction cooker and a controller for controlling a zone-free induction cooker.

### Background

There are two general arrangements of induction cooktops or cookers, which are distinguished by the number and placement of the induction coils. A cooking surface (e.g. a glass surface) is located above the induction coils. Cooking vessels may be placed on the cooking surface where they can be heated by one or more (depending on the arrangement) of the induction coils using electromagnetic induction, as known in the art. Cooking vessels suitable for inductive heating include, e.g., cooking vessels made from or containing ferromagnetic material.

In one arrangement, commonly referred to as a fixed-zone induction cooker, a small number (e.g. four) of induction coils are provided. Each induction coil defines a specific "hob area". A cooking vessel can only be heated if it is placed substantially in one of these hob areas. This requires a user to be careful with the cooking vessel placement and also limits the number of cooking vessels which can be placed on the cooker.

In another arrangement, commonly referred to as a zone-free induction cooker, many smaller induction coils (e.g. twenty, forty, or more) are provided. The induction coils typically cover the entire cooking surface, meaning that a cooking vessel can be placed practically anywhere on the cooking surface, without restriction to specific hob areas. The cooking vessel will then be heated inductively by whichever one or more (typically more) induction coils above which it is located. Sensing devices, such as optical, capacitive, and ultrasonic sensors, are typically provided for detecting the position of the cooking vessel(s) so that the corresponding induction coils can be powered accordingly. EP 2 779 787 A1 discloses a method of controlling an induction cooker according to the preamble of claim 1 and a controller for an induction cooker according to the preamble of claim 9.

### Summary

According to a first aspect disclosed herein, there is provided a method of controlling an induction cooker comprising at least two induction coils for inductively heating cooking vessels, the method comprising: providing a detection signal to a first of said induction coils; providing a detection signal to a second of said induction coils; and measuring a response signal from the first induction coil; and identifying that the response signal from the first induction coil includes an indication of a response signal generated at the second induction coil in response to the detection signal provided to the second induction coil, thereby to determine that a same cooking vessel occupies both the first induction coil and the second induction coil.

This avoids having to provide separate sensing devices, such as discrete sensors and the disadvantages associated therewith, as discussed further below.

In an example, the detection signal provided to the second induction coil is provided at a later time than the detection signal is provided to the first induction coil, and the indication of the response signal generated at the second induction coil is an increase in the amplitude of the response signal from the first induction coil at a point in time corresponding to the time at which the detection signal was provided to the second induction coil.

In an example, the detection signal provided to the second induction coil has a frequency different from that of the detection signal provided to the first induction coil, and the indication of the response signal generated at the second induction coil is a sum of the response signal from the first induction coil and the response signal from the second induction coil.

In an example, the method comprises measuring the response signal from the second induction coil; and wherein said identifying is performed in response to both the response signals being damped. In general, a response signal from an induction coil will be damped due to the presence of (at least part of) a cooking vessel occupying the induction coil.

In an example, the method comprises, in response to determining that a same cooking vessel occupies both the first and second induction coils, assigning the first and second induction coils to the same control zone so that the first and second induction coils are controlled by a single control setting.

In an example, the method comprises: measuring the response signal from the second induction coil; identifying that both the response signals are damped but there is no indication of a response signal generated at the second induction coil in response to the second detection signal, to thereby determine that two separate cooking vessels occupy the first and second induction coils respectively; and, in response to determining that two separate vessels occupy the first and second induction coils respectively, assigning each of the first and second induction coils to separate control zones so that the first and second induction coils are controlled by different respective control settings.

In an example, the induction cooker comprises at least three induction coils, and the method comprises: providing a detection signal to a third of said induction coils to cause the third induction coil to generate a response signal; and identifying that the response signal from the first induction coil includes an indication of a response signal generated at the third induction coil in response to the detection signal provided to the third induction coil, thereby to determine that a same cooking vessel occupies both the first induction coil and the third induction coil.

In an example, the detection signal provided to the third induction coil is provided at a later time than the detection signals are provided to the first and second induction coils, and the indication of the response signal generated at the third induction coil is an increase in the amplitude of the response signal from the first induction coil at a point in time corresponding to the time at which the detection signal was provided to the third induction coil.

According to a second aspect disclosed herein, there is provided a controller for an induction cooker comprising at least two induction coils for inductively heating cooking vessels, the controller being configured so as when installed at an induction cooker to: provide a detection signal to a first of said induction coils; provide a detection signal to a second of said induction coils; measure a response signal from the first induction coil; and identify whether the response signal from the first induction coil includes an indication of a response signal generated at the second induction coil in response to the second detection signal, thereby to determine that a same cooking vessel occupies both the first induction coil and the second induction coil.

In an example, the controller is configured to provide the detection signal to the second induction coil at a later time than the detection signal to the first induction coil, and the indication of the response signal generated at the second induction coil is an increase in the amplitude of the response signal from the first induction coil at a point in time corresponding to the time at which the detection signal was provided to the second induction coil.

In an example, the detection signal provided to the second induction coil has a frequency different from that of the detection signal provided to the first induction coil, and the indication of the response signal generated at the second induction coil is a sum of the response signal from the first induction coil and the response signal from the second induction coil.

In an example, the controller is configured to measure the response signal from the second induction coil; and wherein the controller is configured to perform said identifying in response to both the response signals being damped.

In an example, the controller is configured to, in response to determining that a same cooking vessel occupies both the first and second induction coils, assign the first and second induction coils to the same control zone so that the first and second induction coils are controlled by a single control setting.

In an example, the induction cooker comprises at least three induction coils, and the controller is configured to: provide a detection signal to a third of said induction coils to cause the third induction coil to generate a response signal; and identify that the response signal from the first induction coil includes an indication of a response signal generated at the third induction coil in response to the detection signal provided to the third induction coil, thereby to determine that a same cooking vessel occupies both the first induction coil and the third induction coil.

According to a third aspect disclosed herein, there is provided an induction cooker comprising the controller according to the second aspect and a plurality of induction coils.

### Brief Description of the Drawings

To assist understanding of the present disclosure and to show how embodiments may be put into effect, reference is made by way of example to the accompanying drawings in which:
Figure 1 shows schematically an induction cooker in accordance with an example disclosed herein;
Figure 2 shows schematically an example in which a detection signal is applied to an induction coil which is not currently occupied by a cooking vessel;
Figure 3 shows schematically an example in which a detection signal is applied to an induction coil which is currently occupied by a cooking vessel;
Figure 4 shows schematically an example in which three cooking vessels are present on the induction cooker;
Figure 5a shows schematically a first scenario in which two separate cooking vessels occupy two induction coils;
Figure 5b shows schematically a second scenario in which a single cooking vessel occupies two induction coils;
Figure 6 shows schematically an example of delayed detection signals applied to two induction coils;
Figure 7 shows schematically examples of response signals in accordance with the first scenario;
Figure 8 shows schematically examples of response signals in accordance with the second scenario;
Figure 9 shows an example method in an example described herein;
Figure 10 shows a first example detection signal scheme for a rectangular array of induction coils;
Figure 11 shows a second example detection signal scheme for a rectangular array of induction coils; and
Figure 12 shows an example detection signal scheme for a hexagonal array of induction coils.

### Detailed Description

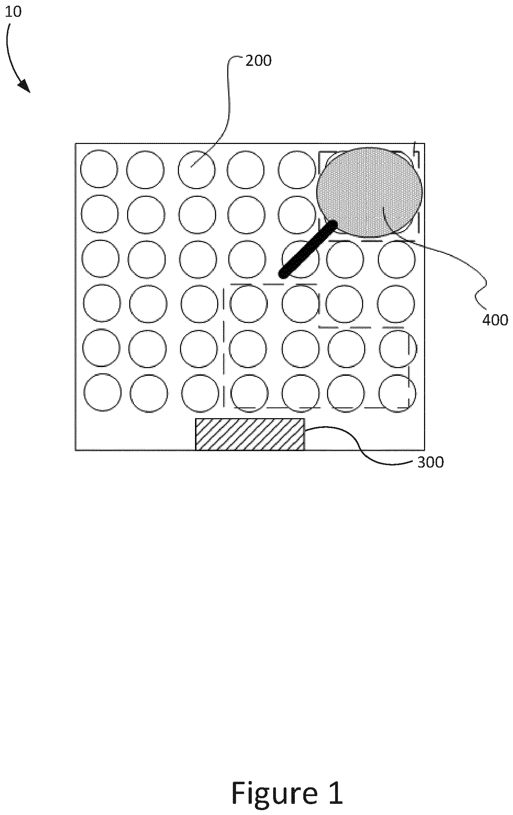

Figure 1 shows an example of an induction cooker 100 in accordance with the present disclosure. For reasons that will become clear, the induction cooker 100 may be referred to as a "zone-free" or "free-zone" induction cooker.

The induction cooker 100 comprises a plurality of induction coils 200 and a controller 300. A cooking surface (e.g. a glass surface) is located above the induction coils 200. Vessels (i.e. cooking vessels) made from or containing ferromagnetic material may be placed on the cooking surface where they can be heated by one or more of the induction coils 200 using electromagnetic induction. An example of a cooking vessel 400 is shown in Figure 1 located at the top-right of the cooking surface. The cooking vessel 400 may be, for example, a pot, pan, etc., made from or containing ferromagnetic material

The induction coils 200 of the so-called "free-zone" induction cooker 100 are smaller than that of a "fixed-zone" induction cooker. For example, each induction coil 200 may be (much) smaller than a typical cooking vessel. This means that there is no particular or definite hob area and the user is able to freely position each cooking vessel on the cooking surface. The cooking vessel can then be heated by whichever induction coil(s) 200 happen(s) to be located below that position. In the example of Figure 1, the illustrative cooking vessel 400 is located above four induction coils 200.

In the example of Figure 1, the induction cooker 100 comprises forty-two induction coils 200 arranged in a 6x7 rectangular grid. In other examples, there may be more or fewer induction coils 200. In other examples, the induction coils 200 may be arranged in a non-rectangular regular (e.g. a hexagonal grid) or an irregular pattern.

The controller 300 is operatively coupled to the plurality of induction coils 200. In operation, the controller 300 controls the power supplied to each of the plurality of induction coils 200 as necessary and thereby controls the amount of inductive heating applied to whatever cooking vessel(s) are present. The controller 300 may be implemented, for example, using one or more processors.

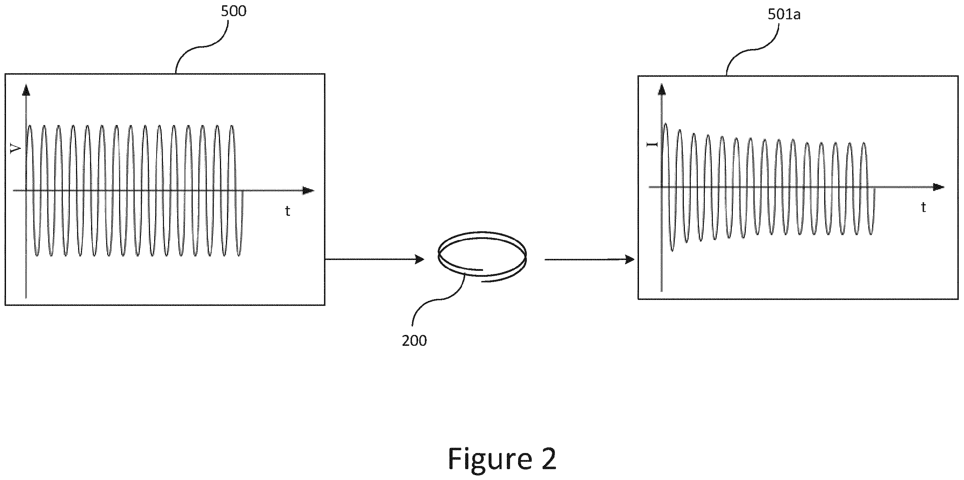

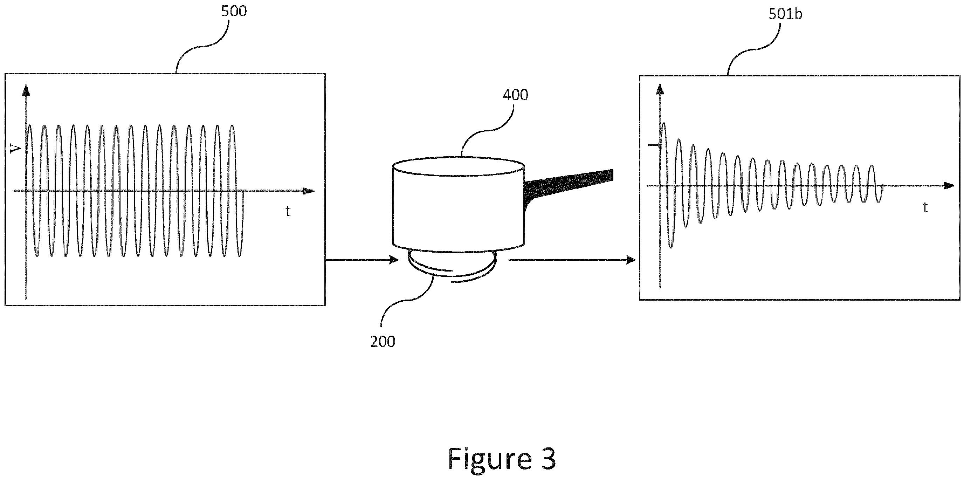

The controller 300 is able to determine, for a given induction coil 200, whether or not there is currently a cooking vessel present on that induction coil 200, as will now be discussed with reference to Figures 2 and 3. This information can be used by the controller 300, for example such that only any induction coil(s) 200 that need to be used (as they do have a cooking vessel placed over them) are powered and such that any induction coils 200 that are not currently being used (as they do not have a cooking vessel placed over them) are not powered.

To determine whether a given induction coil 200 is currently occupied (has a cooking vessel 400 located over it), the controller 30 probes the induction coil 200 by applying a detection signal 500 to the induction coil 200 and measuring a response signal 501 from that induction coil 200. For example, the controller 300 may drive the induction coil 200 with a known voltage (e.g. a sinusoidal AC voltage) and then observing the resulting current.

Figure 2 shows an example in which a detection signal 500 is applied to an induction coil 200 which is not currently occupied by a cooking vessel 400. In this case, the resulting response signal 501a is substantially undamped and only fades slowly.

Figure 3 shows an example in which a detection signal 500 is applied to an induction coil 200 which is currently occupied by a cooking vessel. In this case, the resulting response signal 501b is (heavily) damped and fades quickly. This is due to eddy currents generated in the cooking vessel drawing power from the detection signal 50.

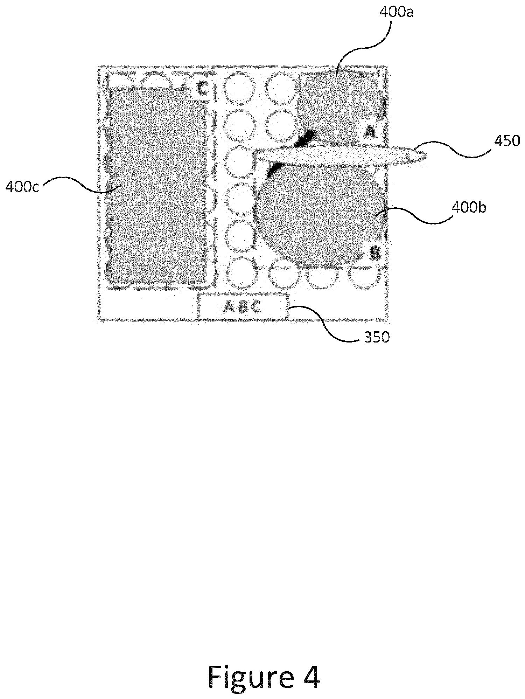

Figure 4 shows an example in which three cooking vessels 400a, 400b, 400c are placed on the induction cooker 100. The first cooking vessel 400a is located in the top-right of the cooking surface. The second cooking vessel 400b is adjacent the first cooking vessel 400a and share a border 450. The third cooking vessel 400c is not adjacent either of the first cooking vessel 400a or second cooking vessel 400b.

A user interface 350 is provided via which a user can provide user input to the controller 300. The user interface 350 may be, for example, a touchscreen or have operable buttons, etc. Compared to a fixed-zone induction cooker, more sophisticated control is required because the vessels may be placed anywhere on the cooking surface, rather than in predefined "hobs".

To allow the user to vary the heating applied to each cooking vessel 400 separately, the induction coils 200 may be divided into "control zones". Each control zone is a set of one or more induction coils 200 sharing a common control setting (e.g. a power setting). Ideally, each control zone corresponds to (the base area of) a single cooking vessel 400. The controller 300 may provide an indication of the current control zones to the user (e.g. on a graphical user interface) so that the user can specify a control setting for each control zone. In other words, each control zone is individually controllable by a user.

The control zones may be defined on an ad-hoc basis depending on the location and position of the cooking vessels. In this example, a first control zone A is defined for the first cooking vessel 400a, a second control zone B for the second cooking vessel 400b, and a third control zone C for the third cooking vessel 400c. The first control zone A comprises the induction coils 200 over which the first cooking vessel 400a is located, the second control zone B comprises the induction coils 200 over which the second cooking vessel 400b is located, and the third control zone C comprises the induction coils 200 over which the third cooking vessel 400c is located.

Detection signals 500, as described above in relation to Figures 2 and 3, can be used to determine which induction coils 200 are currently occupied by (at least part of) a cooking vessel 400. If the controller 300 cannot distinguish between a single cooking vessel and two adjacent or closely located cooking vessels, the controller 300 will assign a single control zone for what is in reality two separate cooking vessels. This prevents the user from specifying separate control settings for each cooking vessel, which is undesirable.

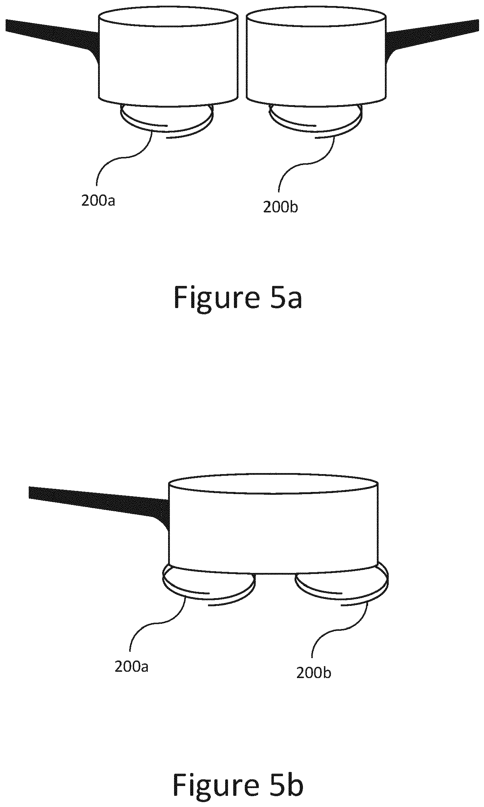

To avoid this, the controller 300 needs to be able to distinguish between the two scenarios shown in Figures 5a and 5b with respect to a first induction coil 200a and a second induction coil 200b which are adjacent one another.

In Figure 5a, a first cooking vessel 400a occupies the first induction coil 200a and a second cooking vessel 400b occupies the second induction coil 200b. In this case, separate control settings may be desired for each of the first cooking vessel 400a and second cooking vessel 400b. Therefore, the controller 300 should assign separate controls zones - a first control zone for the first cooking vessel 400a comprising the first induction coil 200a only, and a second control zone for the second cooking vessel 400b comprising the second induction coil 200b only - so that the user may specify different control settings, using different power settings if desired for example, for each cooking vessel.

In Figure 5b, a single cooking vessel 400c occupies both the first induction coil 200a and the second induction coil 200b. In this case, only a single control setting is required for the single cooking vessel 400c. The controller 300 should therefore assign a single control zone for the single cooking vessel 400a consisting of both the first induction coil 200a and the second induction coil 200b. The user may then specify a single control setting for the single cooking vessel 400a, which is used by the controller 300 to control both the first induction coil 200a and the second induction 200b with the same power setting, etc.

A naive application of detection signals to the induction coils 200a, 200b can allow the controller 300 to identify that induction coils are occupied. However, the response signals from the coils will be damped in both scenarios because there is (part of) a cooking vessel located above both coils. That is, unless other measures are taken, there is no way for a controller to distinguish between the scenario in Figure 5a and the scenario in Figure 5b in order to provide appropriate control options to the user.

Prior art solutions use one or more additional sensing devices for detecting the position of the cooking vessel(s). Examples of such additional sensing devices include optical, capacitive, and ultrasonic sensors. Disadvantages of this include that it creates an additional hardware cost and manufacturing assembly cost. The additional components also increase hardware complexity which may increase the likelihood of failure. Another disadvantage of using such sensing devices is that the determination success rate can be low. This is because both the cooking surface can be thick which reduces the sensor sensitivity and also because the sensing devices are liable to becoming dirty over time as the cooker is used, also reducing the sensor sensitivity.

In examples described herein, a solution is provided which does not require any additional discrete sensing devices (such as optical, capacitive, and ultrasonic sensors as used in the prior art). Instead, the controller 300 provides detection signals to each induction coil 200 which can be distinguished from each other (either because they are supplied at different times or because the detection signals themselves differ from each other in some detectable way) and observes the response signals to identify whether there is an indication of the response signal provided by one induction coil 200 in the response signal received from the other coil 400. Such an indication will be seen only in the case that the same cooking vessel 400 occupies both induction coils 200. This is because, in that case, both detection signals are acting on the same cooking vessel and therefore effectively interfere with each other. When there are separate cooking vessels 400 on each induction coil 200, no such interference occurs and therefore no indication of one detection signal is identifiable in the other response signal.

There are several ways in which the detection signals provided to each inductive coil 200 may be distinguishable or "different". For the purposes of explanation, an example will first be described in which the detection signals are provided to each inductive coil 200 at different times (i.e. offset from one another in time). Other examples are described later below.

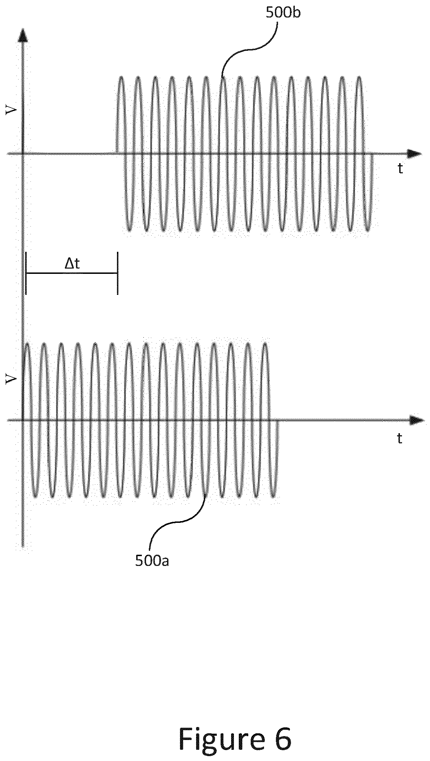

Figure 6 shows a first detection signal 500a and a second detection signal 500b in accordance with an example described herein. Each detection signal comprises a sinusoidal voltage.

The first detection signal 500a is provided to the first induction coil 200a at time t=0. The second detection signal 500b is provided to the second induction coil 200b at a later time. That is, the second detection signal 500b is offset in time from the first detection signal 500a by a time delay Δt.

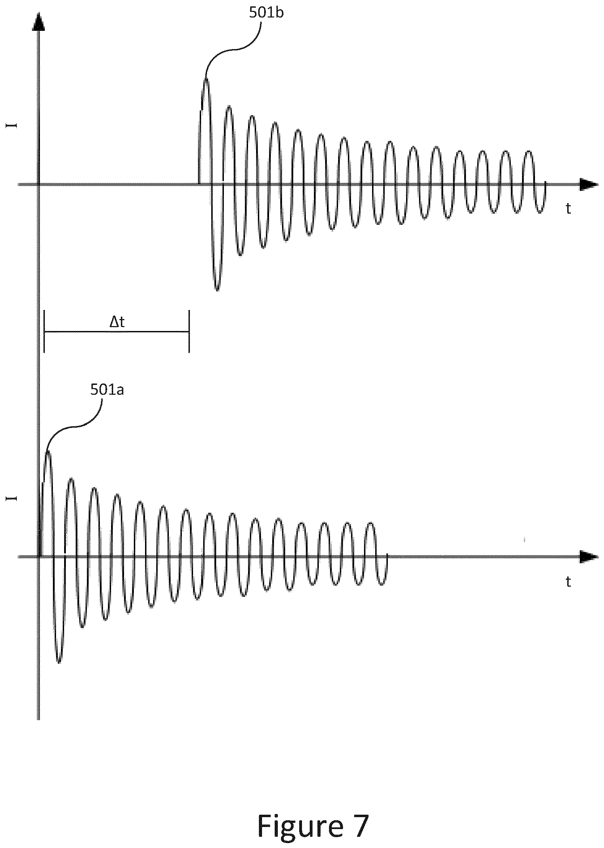

Figure 7 shows the response signals as received from the first induction coil 200a and second induction coil 200b in response to the detection signals 500a, 500b in accordance with the scenario of Figure 5a (separate cooking vessels 400).

In this case, the first response signal 501a and second response signal 501b are each damped sinusoids, indicating that both induction coils 200a, 200b are occupied by a cooking vessel 400. The second response signal 501b is delayed in time relative to the first response signal 501a by Δt.

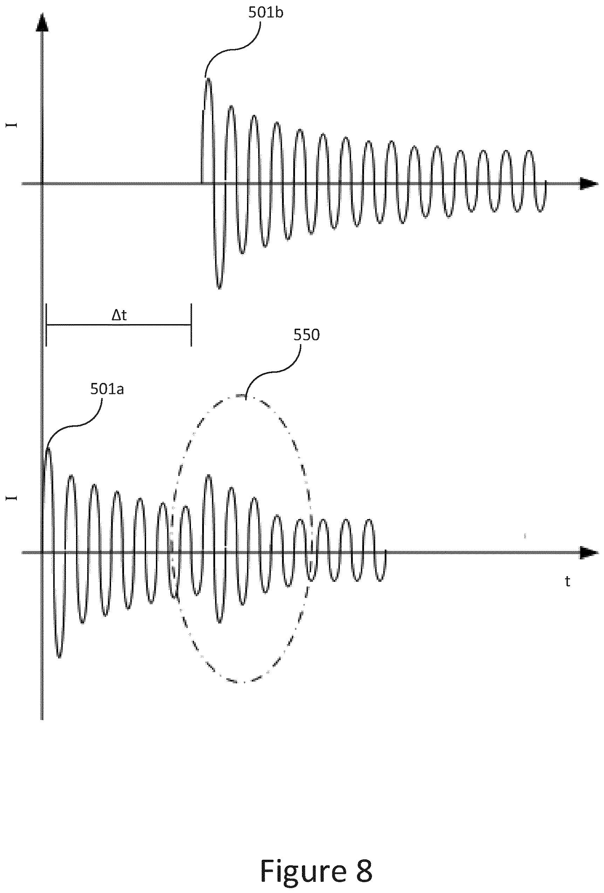

Figure 8 shows the response signals as received from the first induction coil 200a and the second induction coil 200b in response to the detection signals 500a, 500b in accordance with the scenario of Figure 5b (single cooking vessel 400).

In this case, the first response signal 501a and second response signal 501b are damped sinusoids as before. However, there is also an indication 550 of the second detection signal 500b in the first response signal 501a. This indication 550 arises because the detection signal 500b provided to the second induction coil 200b acts on the same cooking vessel 400 (i.e. the same piece of material) and therefore changes the response signal 501a as observed at the first induction coil 200a.

This indication may manifest as an additional increase in the amplitude of the response signal 501a. That is, the first response signal 501 is not a simple damped signal, but comprises an additional component corresponding to the second detection signal 500b. That is, the first response signal 501a shows an artefact of the second response signal 501b. This means that the second detection signal 500b applied to the second induction coil 200b has had some effect at the first induction coil 200a. As mentioned above, this is only the case when the same cooking vessel occupies both induction coils 200a, 200b. Hence, the presence of such an indication 550 can be used to determine that the same cooking vessel 400 occupies both the first induction coil 200a and the second induction coil 200b (i.e. to distinguish between a single cooking vessel and separate cooking vessels).

Note that the time delay Δt of the indication 550 relative to the start of the first response signal 501a corresponds to the time delay Δt between the second detection signal 500b and the first detection signal 500a. This is returned to below.

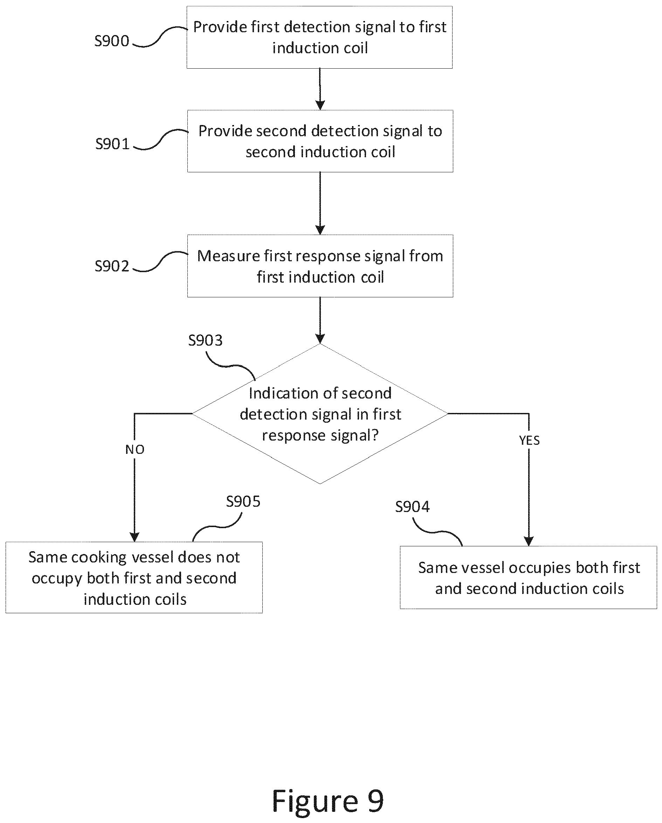

Figure 9 shows an example method performed by the controller 300.

At S900, the controller 300 provides the first detection signal 500a to the first induction coil 200a. This causes the first induction coil 200a to generate a first response signal 501a.

At S901, the controller 300 provides the second detection signal 500b to the second induction coil 200b. This causes the second induction coil 200b to generate a second response signal 501b.

At S902, the controller 300 measures the first response signal 501a from the first induction coil 200a.

At S903, the controller 300 identifies whether there is an indication 550 of the second detection signal in the first response signal 501a.

If there is an indication 550 of the second detection signal 500b in the first response signal 501a, the controller 300 proceeds to S904 in which the controller 300 determines that the same vessel 400 occupies both the first induction coil 200a and the second induction coil 200b.

On the other hand, if there is no indication 550 of the second detection signal 500b in the first response signal 501a, the controller proceeds to S905, where it is determined that it is not the case that the same cooking vessel 400 occupies both the first induction coil 200a and second induction coil 200b.

It is appreciated that the method of Figure 9 is exemplary and that in other examples the controller 300 may perform additional operations, perform the operations in a different order, etc.

For example, the controller 300 may additionally measure the second response signal 501b and only perform the identifying at S903 if both the first response signal 501a and second response signal 501b are damped. This is advantageous because if one (or both) of the response signals 501a, 501b are not damped, then there is no cooking vessel 400 present on the respective induction coil(s) and therefore the controller 300 can rule out the possibility that a single cooking vessel 400 occupies both induction coils 200a, 200b without needing to identify presence or absence of the indication 550 as described above.

In general, the controller 300 may provide a respective detection signal 500 and measure a respective response signal 501 from any induction coils 200 present. Any induction coils 200 that provide a damped response signal 501 can be determined to by occupied by (part of) a cooking vessel 400. The controller 300 can additionally analyse the response signal(s) 501 to identify which induction coil(s) 200 interfere with which other induction coil(s) 200 and use this to determine the location of the cooking vessel(s) 400 on the cooking surface, as described above. In particular, the controller 300 can identify a border between two adjacent cooking vessels 400 if two adjacent induction coils 200 provide damped response signals 501 but there is no indication 550 of another response signal 501 being present in either response signal 501.

Once the controller 300 has determined the location of the cooking vessel(s) 400, it can provide appropriate control options to the user. To continue the example above, the controller may automatically provide a single control setting for both the first induction coil 200a and second induction coil 200b in response to determining that a same vessel 400 occupies both the induction coils 200a, 200b, and automatically provide separate control settings for the first induction coil 200a and the second induction coil 200b in response to determining that two separate cooking vessels 400 occupy the induction coils 200a, 200b.

A real-world induction cooker 100 may comprise many induction coils 200 rather than the two in the simplified example described above. In such cases, there is the possibility of ambiguity between precisely which two (or more) induction coils 200 a single cooking vessel 400 is occupying. In examples, the controller 300 can also identify which adjacent induction coil 400 this is by leveraging a property (such as the time delay) of the detection signals 500 provided to each induction coil 400.

Consider an induction cooker 100 comprising three induction coils 200a, 200b, 200c, for example, where: the first induction coil 200a is adjacent the second induction coil 200b and the third induction coil 200c; and the second induction coil 200b and third induction coil 200c are not adjacent one another.

In this arrangement, the controller 300 may provide a respective detection signal 500 to each induction coil 200 with a different time delay. For example, the controller 300 may provide a first detection signal to the first induction coil 200a at time t=0ms, a second detection signal to the second induction coil 200b at time t=10ms, and a third detection signal to the third induction coil 200c at time t=20ms.

Then, when the controller 300 measures the response signal from the first induction coil 200a, it can determine the delay between the start of the response signal and the indication 550. If the delay is around 10ms, then the controller 300 determines that the cooking vessel 400 occupying the first induction coil 200a is also occupying the second induction coil 200b. If instead the delay is around 20ms, then the controller 300 determines that the cooking vessel 400 occupying the first induction coil 200a is also occupying the third induction coil 200c. If there are two indications, at 10ms and 20ms respectively, then then the controller 300 determines that the cooking vessel 400 occupying the first induction coil 200a is also occupying both the second induction coil 200b and the third induction coil 200c.

Similar principles hold for induction cookers 100 comprising any number of induction coils 200. In a naive example, each induction coil 200 may be driven with its own unique time delay. This is certainly sufficient to allow the controller 300 to distinguish between indications 550 of each detection signal 500. However, fewer different time delays can be used, depending on the layout of the induction coils 200. This is because, in particular, if the controller 300 detects cooking vessels 400 which are located on induction coils 200 which are non-adjacent (e.g. far apart), then it can be assumed that these are not the same cooking vessel 400. This means that the same detection signal (having the same property, e.g. time delay, frequency (see further below), etc.) can be used for both these induction coils 200. In general, only different detection signals 500 are required for the nearest neighbours to a given induction coil 200.

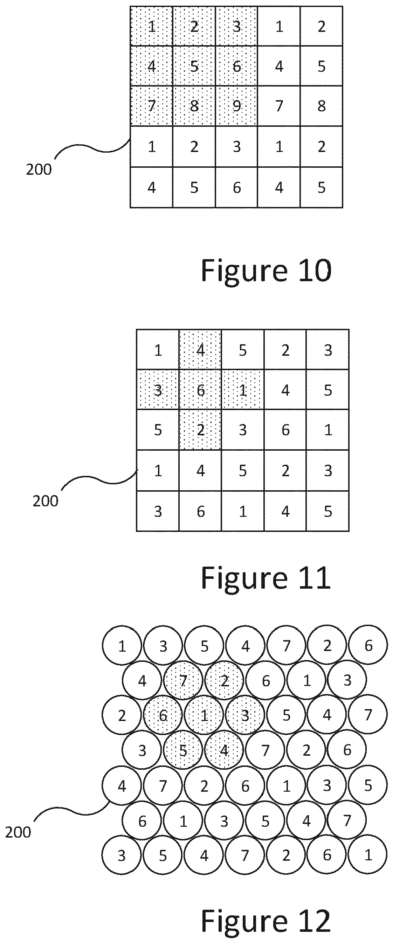

Figure 10 shows an example for a regular rectangular array of induction coils 200. In this case, nine different time delays can be used while still achieving the condition that no two adjacent coils have the same time delay. That is, the induction coils 200 can be grouped into nine sets, the induction coils 200 within each set having the same time delay. For the sake of simplicity, the time delays are labelled simply 1-9. It is appreciated that the actual time delays may be any time delay that can be accurately resolved by the controller 300. For example, the time delays may be 0ms, 10ms, 20ms, ..., 80ms. This can then repeat, meaning that the controller 300 can perform the cooking vessel layout determination in less than a second for an induction cooker 100 of any size.

As shown in Figure 11, only six different time delays are required if diagonals are excluded.

Figure 12 shows an example for a regular hexagonal array of induction coils 200. In this case, seven different time delays can be used while still achieving the condition that no two adjacent coils have the same time delay.

As mentioned earlier above, there are other ways in which the detection signals provided to each inductive coil 200 may be "different" or otherwise distinguishable. In general, any property of the detection signal which is detectable in the response from an adjacent induction coil 200 when the same cooking vessel 400 is present may be used. For example, the detection signals may have different frequencies, and/or may be modulated in some manner (e.g. amplitude modulation, frequency modulation, pulse width modulation), e.g. to embed a different code into each detection signal 500. In such cases, the first response signal 501a is modulated by the second response signal 501b (if the cooking vessel 400 is over both induction coils 200, and not otherwise). That is, the first response signal 501a shows an artefact of the second response signal 501b.

Similar considerations to those described above in relation to Figures 10 to 12 also apply in cases where the detection signals have different frequencies, are modulated in different manners, etc.

As a specific example, with reference to Figures 10, 11 and 12, the numbers 1-9 may represent detection signals 500 having different frequencies. In this case, the detection signals 500 do not need to be delayed relative to one another. Rather, they can all be applied by the controller 300 at the same time (though in some examples detection signals 500 having different frequencies may be applied at different times, which may assist further in resolving the detected response signals 501). The controller 300 may apply a variety of techniques to identify an indication 550 in a given response signal 501 and, in particular, to identify which other induction coil 200 was the cause of the indication 550.

For example, when two different but similar frequencies are used for different detection signals 500, the controller 300 may identify a beat frequency in the response signal 501 and then determine that the cooking vessel 400 overlaps with the other induction coil 200 which was provided with the detection signal 500 having the specific frequency required to produce that beat frequency.

In another example, the controller 300 may apply a Fourier transform (e.g. an FFT) to identify the frequency components of the response signal 501. The controller 300 can then assign a single control zone for all the induction coils 200 which were provided with those frequencies, as a single cooking vessel 200 must be occupying all those induction coils 200.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

## Claims

1. A method of controlling an induction cooker (100) comprising at least two induction coils (200) for inductively heating cooking vessels (400), the method comprising:
providing a detection signal (500a) to a first of said induction coils (200a);
providing a detection signal (500b) to a second of said induction coils (200b); and
measuring a response signal (501a) from the first induction coil (200a); and
**characterised by**
identifying that the response signal (501a) from the first induction coil (200a) includes an indication (550) of a response signal (501b) generated at the second induction coil (200b) in response to the detection signal (500b) provided to the second induction coil (200b), thereby to determine that a same cooking vessel (400) occupies both the first induction coil (200a) and the second induction coil (200b).

2. A method according to claim 1, wherein the detection signal (500b) provided to the second induction coil (200b) is provided at a later time than the detection signal (500a) is provided to the first induction coil (200a), and the indication (550) of the response signal (501b) generated at the second induction coil (200b) is an increase in the amplitude of the response signal (501a) from the first induction coil (200a) at a point in time corresponding to the time at which the detection signal (500b) was provided to the second induction coil (200b).

3. A method according to claim 1 or claim 2, wherein the detection signal (500b) provided to the second induction coil (200b) has a frequency different from that of the detection signal (500a) provided to the first induction coil (200a), and wherein the indication (550) of the response signal (501b) generated at the second induction coil (200b) is a sum of the response signal (501a) from the first induction coil (200a) and the response signal (501b) from the second induction coil (200b).

4. A method according to any of claims 1 to 3, comprising measuring the response signal (501b) from the second induction coil (200b); and wherein said identifying is performed in response to both the response signals (501a, 501b) being damped.

5. A method according to any of claims 1 to 4, comprising, in response to determining that a same cooking vessel (400) occupies both the first and second induction coils (200a, 200b), assigning the first and second induction coils (200a, 200b) to the same control zone so that the first and second induction coils (200a, 200b) are controlled by a single control setting.

6. A method according to any of claims 1 to 5, comprising:
measuring the response signal (501b) from the second induction coil (200b);
identifying that both the response signals (501a, 501b) are damped but there is no indication (550) of a response signal (501b) generated at the second induction coil (200b) in response to the second detection signal (500b), to thereby determine that two separate cooking vessels occupy the first and second induction coils (200a, 200b) respectively; and
in response to determining that two separate vessels occupy the first and second induction coils (200a, 200b) respectively, assigning each of the first and second induction coils (200a, 200b) to separate control zones so that the first and second induction coils (200a, 200b) are controlled by different respective control settings.

7. A method according to any of claims 1 to 6, wherein the induction cooker (100) comprises at least three induction coils (200a, 200b, 200c), the method comprising:
providing a detection signal to a third of said induction coils (200c) to cause the third induction coil (200c) to generate a response signal; and
identifying that the response signal from the first induction coil (200a) includes an indication (550) of a response signal generated at the third induction coil (200c) in response to the detection signal provided to the third induction coil (200c), thereby to determine that a same cooking vessel (400) occupies both the first induction coil (200a) and the third induction coil (200c).

8. A method according to claim 7, wherein the detection signal provided to the third induction coil (200c) is provided at a later time than the detection signals (500a, 500b) are provided to the first and second induction coils (200a, 200b), and the indication (550) of the response signal generated at the third induction coil (200c) is an increase in the amplitude of the response signal (501a) from the first induction coil (200a) at a point in time corresponding to the time at which the detection signal was provided to the third induction coil (200c).

9. A controller (300) for an induction cooker (100) comprising at least two induction coils (200) for inductively heating cooking vessels (400), the controller (300) being configured so as when installed at an induction cooker (100) to:
provide a detection signal (500a) to a first of said induction coils (200a);
provide a detection signal (500b) to a second of said induction coils (200b);
measure a response signal (501a) from the first induction coil (200a); and **characterised by**
identify whether the response signal (501a) from the first induction coil (200a) includes an indication (550) of a response signal (501b) generated at the second induction coil (200b) in response to the second detection signal (500b), thereby to determine that a same cooking vessel (400) occupies both the first induction coil (200a) and the second induction coil (200b).

10. A controller (300) according to claim 9, configured to provide the detection signal (500b) to the second induction coil (200b) at a later time than the detection signal (500a) to the first induction coil (200a), wherein the indication (550) of the response signal (501b) generated at the second induction coil (200b) is an increase in the amplitude of the response signal (501a) from the first induction coil (200a) at a point in time corresponding to the time at which the detection signal (500b) was provided to the second induction coil (200b).

11. A controller (300) according to claim 9 or claim 10, wherein the detection signal (500b) provided to the second induction coil (200b) has a frequency different from that of the detection signal (500a) provided to the first induction coil (200a), and wherein the indication (550) of the response signal (501b) generated at the second induction coil (200b) is a sum of the response signal (501a) from the first induction coil (200a) and the response signal (501b) from the second induction coil (200b).

12. A controller (300) according to any of claims 9 to 11, configured to measure the response signal (501b) from the second induction coil (200b); and wherein the controller (300) is configured to perform said identifying in response to both the response signals (501a, 501b) being damped.

13. A controller (300) according to any of claims 9 to 12, configured to, in response to determining that a same cooking vessel (400) occupies both the first and second induction coils (200a, 200b), assign the first and second induction coils (200a, 200b) to the same control zone so that the first and second induction coils (200a, 200b) are controlled by a single control setting.

14. A controller (300) according to any of claims 9 to 13, wherein the induction cooker (100) comprises at least three induction coils (200a, 200b, 200c), and the controller (300) is configured to:
provide a detection signal to a third of said induction coils (200c) to cause the third induction coil (200c) to generate a response signal; and
identify that the response signal from the first induction coil (200a) includes an indication (550) of a response signal generated at the third induction coil (200c) in response to the detection signal provided to the third induction coil (200c), thereby to determine that a same cooking vessel (400) occupies both the first induction coil (200a) and the third induction coil (200c).

15. An induction cooker (100) comprising the controller (300) according to any of claims 9 to 14 and a plurality of induction coils (200).

## Patentansprüche

1. Verfahren zur Steuerung eines Induktionsherds (100) mit mindestens zwei Induktionsspulen (200) zum induktiven Erhitzen von Kochgefäßen (400), wobei das Verfahren umfasst:
Bereitstellen eines Detektionssignals (500A) für eine erste der Induktionsspulen (200A);
Bereitstellen eines Detektionssignals (500b) für eine zweite der Induktionsspulen (200b); und
Messen eines Antwortsignals (501A) von der ersten Induktionsspule (200A); und
**gekennzeichnet durch**
Identifizieren, dass das Antwortsignal (501a) von der ersten Induktionsspule (200a) eine Anzeige (550) eines Antwortsignals (501b) umfasst, das an der zweiten Induktionsspule (200b) als Reaktion auf das der zweiten Induktionsspule (200b) zugeführte Detektionssignal (500b) erzeugt wird, wodurch bestimmt wird, dass ein und dasselbe Kochgefäß (400) sowohl die erste Induktionsspule (200a) als auch die zweite Induktionsspule (200b) belegt.

2. Verfahren nach Anspruch 1, wobei das der zweiten Induktionsspule (200b) zur Verfügung gestellte Detektionssignal (500b) zu einem späteren Zeitpunkt bereitgestellt wird, als das Detektionssignal (500a) der ersten Induktionsspule (200a) zur Verfügung gestellt wird, und die Anzeige (550) des an der zweiten Induktionsspule (200b) erzeugten Antwortsignals (501b) eine Erhöhung der Amplitude des Antwortsignals (501a) von der ersten Induktionsspule (200a) zu einem Zeitpunkt ist, der dem Zeitpunkt entspricht, zu dem das Detektionssignal (500b) an die zweite Induktionsspule (200b) abgegeben wurde.

3. Verfahren nach Anspruch 1 oder Anspruch 2, wobei das der zweiten Induktionsspule (200b) zugeführte Detektionssignal (500b) eine Frequenz aufweist, die sich von derjenigen des der ersten Induktionsspule (200a) zugeführten Detektionssignals (500a) unterscheidet, und wobei die Anzeige (550) des an der zweiten Induktionsspule (200b) erzeugten Antwortsignals (501b) eine Summe des Antwortsignals (501a) von der ersten Induktionsspule (200a) und des Antwortsignal (501b) von der zweiten Induktionsspule (200b) ist.

4. Verfahren nach einem der Ansprüche 1 bis 3, umfassend ein Messen des Antwortsignals (501b) von der zweiten Induktionsspule (200b); und wobei die Identifizierung als Reaktion auf eine Dämpfung beider Antwortsignale (501a, 501b) durchgeführt wird.

5. Verfahren nach einem der Ansprüche 1 bis 4, umfassend, als Reaktion auf die Feststellung, dass ein und derselbe Kochbehälter (400) sowohl die erste als auch die zweite Induktionsspule (200a, 200b) belegt, ein Zuordnen der ersten und zweiten Induktionsspule (200a, 200b) zur gleichen Steuerzone, so dass die erste und die zweite Induktionsspule (200a, 200b) durch eine einzige Steuereinstellung gesteuert werden.

6. Verfahren nach einem der Ansprüche 1 bis 5, umfassend:
Messen des Antwortsignals (501b) von der zweiten Induktionsspule (200b);
Identifizieren, dass beide Antwortsignale (501a, 501b) gedämpft sind, aber keine Anzeige (550) für ein an der zweiten Induktionsspule (200b) als Reaktion auf das zweite Detektionssignal (500b) erzeugtes Antwortsignal (501b) vorliegt, um dadurch zu bestimmen, dass zwei getrennte Kochgefäße die erste bzw. zweite Induktionsspule (200a, 200b) belegen; und
als Reaktion auf die Feststellung, dass die erste und zweite Induktionsspule (200A, 200B) jeweils von zwei getrennten Gefäßen belegt sind, Zuordnen jeder der ersten und zweiten Induktionsspulen (200A, 200B) zu getrennten Steuerzonen, so dass die erste und die zweite Induktionsspule (200A, 200B) durch jeweils unterschiedliche Steuereinstellungen gesteuert werden.

7. Verfahren nach einem der Ansprüche 1 bis 6, wobei der Induktionsherd (100) mindestens drei Induktionsspulen (200a, 200b, 200c) umfasst, wobei das Verfahren umfasst:
Bereitstellen eines Detektionssignals für eine Dritte der Induktionsspulen (200c), um die dritte Induktionsspule (200c) zu veranlassen, ein Antwortsignal zu erzeugen; und
Identifizieren, dass das Antwortsignal von der ersten Induktionsspule (200A) eine Anzeige (550) eines Antwortsignals enthält, das an der dritten Induktionsspule (200c) als Reaktion auf das an die dritte Induktionsspule (200c) übermittelte Detektionssignal erzeugt wird, wodurch bestimmt wird, dass ein und dasselbe Kochgefäß (400) sowohl die erste Induktionsspule (200A) als auch die dritte Induktionsspule (200c) belegt.

8. Verfahren nach Anspruch 7, wobei das Detektionssignal, das der dritten Induktionsspule (200c) zugeführt wird, zu einem späteren Zeitpunkt bereitgestellt wird, als die Detektionssignale (500a, 500b) der ersten und zweiten Induktionsspule (200a, 200b) zur Verfügung gestellt werden, und die Anzeige (550) des an der dritten Induktionsspule (200c) erzeugten Antwortsignals eine Erhöhung der Amplitude des Antwortsignals (501a) von der ersten Induktionsspule (200a) zu einem Zeitpunkt ist, der dem Zeitpunkt entspricht, zu dem das Detektionssignal an die dritte Induktionsspule (200c) geliefert wurde.

9. Steuergerät (300) für einen Induktionsherd (100) mit mindestens zwei Induktionsspulen (200) zum induktiven Erhitzen von Kochgefäßen (400), wobei das Steuergerät (300) so konfiguriert ist, dass es bei Installation an einem Induktionsherd (100):
ein Detektionssignal (500 A) für eine erste der Induktionsspulen (200 A) bereitstellt;
ein Detektionssignals (500b) für eine zweite der Induktionsspulen (200b) bereitstellt;
ein Antwortsignals (501A) von der ersten Induktionsspule (200A) misst; und
es **dadurch gekennzeichnet ist, dass** es
identifiziert, ob das Antwortsignal (501a) von der ersten Induktionsspule (200a) eine Anzeige (550) eines Antwortsignals (501b) enthält, das an der zweiten Induktionsspule (200b) als Reaktion auf das zweite Detektionssignal (500b) erzeugt wurde, wodurch bestimmt wird, dass ein und dasselbe Kochgefäß (400) sowohl die erste Induktionsspule (200a) als auch die zweite Induktionsspule (200b) belegt.

10. Steuergerät (300) nach Anspruch 9, so konfiguriert, dass es das Detektionssignal (500b) an die zweite Induktionsspule (200b) zu einem späteren Zeitpunkt als das Detektionssignal (500a) an die erste Induktionsspule (200a) liefert, wobei die Anzeige (550) des an der zweiten Induktionsspule (200b) erzeugten Antwortsignals (501b) eine Erhöhung der Amplitude des Antwortsignals (501a) von der ersten Induktionsspule (200a) zu einem Zeitpunkt ist, der dem Zeitpunkt entspricht, zu dem das Detektionssignal (500b) an die zweite Induktionsspule (200b) abgegeben wurde.

11. Steuergerät (300) nach Anspruch 9 oder Anspruch 10, wobei das der zweiten Induktionsspule (200b) zugeführte Detektionssignal (500b) eine andere Frequenz aufweist als das der ersten Induktionsspule (200a) zugeführte Detektionssignal (500a), und wobei die Anzeige (550) des an der zweiten Induktionsspule (200b) erzeugten Antwortsignals (501b) eine Summe des Antwortsignal (501a) von der ersten Induktionsspule (200a) und des Antwortsignals (501b) von der zweiten Induktionsspule (200b) ist.

12. Steuergerät (300) nach einem der Ansprüche 9 bis 11, konfiguriert zum Messen des Antwortsignals (501b) von der zweiten Induktionsspule (200b); und wobei das Steuergerät (300) so konfiguriert ist, dass es die Identifizierung als Reaktion auf eine Dämpfung beider Antwortsignale (501a, 501b) durchführt.

13. Steuergerät (300) nach einem der Ansprüche 9 bis 12, so konfiguriert, dass es als Reaktion auf die Feststellung, dass ein und dasselbe Kochgefäß (400) sowohl die erste als auch die zweite Induktionsspule (200a, 200b) belegt, die erste und die zweite Induktionsspule (200a, 200b) derselben Steuerzone zuordnet, so dass die erste und die zweite Induktionsspule (200a, 200b) durch eine einzige Steuereinstellung gesteuert werden.

14. Steuergerät (300) nach einem der Ansprüche 9 bis 13, wobei der Induktionsherd (100) mindestens drei Induktionsspulen (200a, 200b, 200c) umfasst und das Steuergerät (300) konfiguriert ist zum:
Bereitstellen eines Detektionssignals für eine Dritte der Induktionsspulen (200c), um die dritte Induktionsspule (200c) zu veranlassen, ein Antwortsignal zu erzeugen; und
Identifizieren, dass das Antwortsignal von der ersten Induktionsspule (200A) eine Anzeige (550) eines Antwortsignals enthält, das an der dritten Induktionsspule (200c) als Reaktion auf das an die dritte Induktionsspule (200c) übermittelte Detektionssignal erzeugt wurde, wodurch bestimmt wird, dass ein und dasselbe Kochgefäß (400) sowohl die erste Induktionsspule (200A) als auch die dritte Induktionsspule (200c) belegt.

15. Induktionsherd (100), umfassend das Steuergerät (300) nach einem der Ansprüche 9 bis 14 und eine Vielzahl von Induktionsspulen (200).

## Revendications

1. Procédé de commande d'un appareil de cuisson à induction (100) comprenant au moins deux bobines d'induction (200) servant à chauffer par induction des récipients de cuisson (400), le procédé consistant à :
fournir un signal de détection (500a) à une première desdites bobines d'induction (200a)
fournir un signal de détection (500b) à une deuxième desdites bobines d'induction (200b) ; et
mesurer un signal de réponse (501a) provenant de la première bobine d'induction (200a), et
**caractérisé en ce que** le procédé consiste à :
identifier que le signal de réponse (501a) provenant de la première bobine d'induction (200a) inclut une indication (550) d'un signal de réponse (501b) généré au niveau de la deuxième bobine d'induction (200b) en réponse au signal de détection (500b) fourni à la deuxième bobine d'induction (200b), déterminant ainsi qu'un même récipient de cuisson (400) occupe à la fois la première bobine d'induction (200a) et la deuxième bobine d'induction (200b).

2. Procédé selon la revendication 1, dans lequel le signal de détection (500b) fourni à la deuxième bobine d'induction (200b) est fourni à un moment ultérieur à celui auquel le signal de détection (500a) est fourni à la première bobine d'induction (200a), et l'indication (550) du signal de réponse (501b) généré au niveau de la deuxième bobine d'induction (200b) est une augmentation de l'amplitude du signal de réponse (501a) provenant de la première bobine d'induction (200a) à un instant correspondant au moment auquel le signal de détection (500b) a été fourni à la deuxième bobine d'induction (200b).

3. Procédé selon la revendication 1 ou 2, dans lequel le signal de détection (500b) fourni à la deuxième bobine d'induction (200b) a une fréquence différente de celle du signal de détection (500a) fourni à la première bobine d'induction (200a), et dans lequel l'indication (550) du signal de réponse (501b) généré au niveau de la deuxième bobine d'induction (200b) est une somme du signal de réponse (501a) provenant de la première bobine d'induction (200a) et du signal de réponse (501b) provenant de la deuxième bobine d'induction (200b).

4. Procédé selon l'une quelconque des revendications 1 à 3, consistant à mesurer le signal de réponse (501b) provenant de la deuxième bobine d'induction (200b), et dans lequel ladite identification est effectuée en réponse aux deux signaux de réponse (501a, 501b) étant amortis.

5. Procédé selon l'une quelconque des revendications 1 à 4, consistant, en réponse à la détermination selon laquelle un même récipient de cuisson (400) occupe à la fois les première et deuxième bobines d'induction (200a, 200b), à attribuer les première et deuxième bobines d'induction (200a, 200b) à la même zone de commande de sorte que les première et deuxième bobines d'induction (200a, 200b) sont contrôlées par un unique réglage de commande.

6. Procédé selon l'une quelconque des revendications 1 à 5, consistant à :
mesurer le signal de réponse (501b) provenant de la deuxième bobine d'induction (200b)
identifier que les deux signaux de réponse (501a, 501b) sont amortis mais qu'il n'y a aucune indication (550) d'un signal de réponse (501b) généré au niveau de la deuxième bobine d'induction (200b) en réponse au deuxième signal de détection (500b), déterminant ainsi que deux récipients de cuisson séparés occupent respectivement les première et deuxième bobines d'induction (200a, 200b) ; et
en réponse à la détermination selon laquelle deux récipients séparés occupent respectivement les première et deuxième bobines d'induction (200a, 200b), attribuer à chacune des première et deuxième bobines d'induction (200a, 200b) des zones de commande séparées de sorte que les première et deuxième bobines d'induction (200a, 200b) sont commandées par différents réglages de commande respectifs.

7. Procédé selon l'une quelconque des revendications 1 à 6, dans lequel l'appareil de cuisson à induction (100) comprend au moins trois bobines d'induction (200a, 200b, 200c), le procédé consistant à :
fournir un signal de détection à une troisième desdites bobines d'induction (200c) afin d'amener la troisième bobine d'induction (200c) à générer un signal de réponse ; et
identifier que le signal de réponse provenant de la première bobine d'induction (200a) inclut une indication (550) d'un signal de réponse généré au niveau de la troisième bobine d'induction (200c) en réponse au signal de détection fourni à la troisième bobine d'induction (200c), déterminant ainsi qu'un même récipient de cuisson (400) occupe à la fois la première bobine d'induction (200a) et la troisième bobine d'induction (200c).

8. Procédé selon la revendication 7, dans lequel le signal de détection fourni à la troisième bobine d'induction (200c) est fourni à un moment ultérieur à celui auquel les signaux de détection (500a, 500b) sont fournis aux première et deuxième bobines d'induction (200a, 200b), et l'indication (550) du signal de réponse généré au niveau de la troisième bobine d'induction (200c) est une augmentation de l'amplitude du signal de réponse (501a) provenant de la première bobine d'induction (200a) à un instant correspondant au moment auquel le signal de détection a été fourni à la troisième bobine d'induction (200c).

9. Contrôleur (300) destiné à un appareil de cuisson à induction (100), comprenant au moins deux bobines d'induction (200) servant à chauffer par induction des récipients de cuisson (400), le contrôleur (300) étant configuré, une fois installé sur l'appareil de cuisson à induction (100), pour :
fournir un signal de détection (500a) à une première desdites bobines d'induction (200a)
fournir un signal de détection (500b) à une deuxième desdites bobines d'induction (200b)
mesurer un signal de réponse (501a) provenant de la première bobine d'induction (200a), et
**caractérisé en ce qu'**il est en outre configuré pour :
identifier si le signal de réponse (501a) provenant de la première bobine d'induction (200a) inclut une indication (550) d'un signal de réponse (501b) généré au niveau de la deuxième bobine d'induction (200b) en réponse au deuxième signal de détection (500b), déterminant ainsi qu'un même récipient de cuisson (400) occupe à la fois la première bobine d'induction (200a) et la deuxième bobine d'induction (200b).

10. Contrôleur (300) selon la revendication 9, configuré pour fournir le signal de détection (500b) à la deuxième bobine d'induction (200b) à un moment ultérieur à celui auquel le signal de détection (500a) est fourni à la première bobine d'induction (200a), dans lequel l'indication (550) du signal de réponse (501b) généré au niveau de la deuxième bobine d'induction (200b) est une augmentation de l'amplitude du signal de réponse (501a) provenant de la première bobine d'induction (200a) à un instant correspondant au moment auquel le signal de détection (500b) a été fourni à la deuxième bobine d'induction (200b).

11. Contrôleur (300) selon la revendication 9 ou 10, dans lequel le signal de détection (500b) fourni à la deuxième bobine d'induction (200b) a une fréquence différente de celle du signal de détection (500a) fourni à la première bobine d'induction (200a), et dans lequel l'indication (550) du signal de réponse (501b) généré au niveau de la deuxième bobine d'induction (200b) est une somme du signal de réponse (501a) provenant de la première bobine d'induction (200a) et du signal de réponse (501b) provenant de la deuxième bobine d'induction (200b).

12. Contrôleur (300) selon l'une quelconque des revendications 9 à 11, configuré pour mesurer le signal de réponse (501b) provenant de la deuxième bobine d'induction (200b), et dans lequel le contrôleur (300) est configuré pour effectuer ladite identification en réponse aux deux signaux de réponse (501a, 501b) étant amortis.

13. Contrôleur (300) selon l'une quelconque des revendications 9 à 12, configuré, en réponse à la détermination selon laquelle un même récipient de cuisson (400) occupe à la fois les première et deuxième bobines d'induction (200a, 200b), pour attribuer les première et deuxième bobines d'induction (200a, 200b) à la même zone de commande de sorte que les première et deuxième bobines d'induction (200a, 200b) sont commandées par un unique réglage de commande.

14. Contrôleur (300) selon l'une quelconque des revendications 9 à 13, dans lequel l'appareil de cuisson à induction (100) comprend au moins trois bobines d'induction (200a, 200b, 200c), et le contrôleur (300) est configuré pour :
fournir un signal de détection à une troisième desdites bobines d'induction (200c) pour amener la troisième bobine d'induction (200c) à générer un signal de réponse ; et
identifier que le signal de réponse provenant de la première bobine d'induction (200a) inclut une indication (550) d'un signal de réponse généré au niveau de la troisième bobine d'induction (200c) en réponse au signal de détection fourni à la troisième bobine d'induction (200c), déterminant ainsi qu'un même récipient de cuisson (400) occupe à la fois la première bobine d'induction (200a) et la troisième bobine d'induction (200c).

15. Appareil de cuisson à induction (100), comprenant le contrôleur (300) selon l'une quelconque des revendications 9 à 14 et de multiples bobines d'induction (200).
